# EUROPÄISCHE PATENTANMELDUNG

(11) **EP 4 852 305 A1**
(43) Veröffentlichungstag der Anmeldung: **09.12.2026**
(21) Anmeldenummer: 26178312.0
(22) Anmeldetag: 12.05.2026
(51) Int. Cl.: H02P 6/18, A47L 15/42, H02P 6/26, H02P 6/34, H02P 23/14, H02P 25/04

(54) **VERFAHREN ZUM BETREIBEN EINES ANTRIEBSSYSTEMS**

(30) Priorität: 02.06.2025 LU 601874
(71) Anmelder: Miele & Cie. KG, 33332 Gütersloh (DE)
(72) Erfinder: Schaefer-van den Boom, Klaus, 53489 Sinzig (DE); Sammoud, Hafedh, 8090 Kelibia (TN); Rech, Thomas, 53881 Euskirchen (DE)

(57) **Zusammenfassung**

Die Erfindung betrifft ein Verfahren zum Betreiben eines Antriebssystems mit wenigstens den Schritten:
• Starten (000) einer Drehbewegung eines Motors, vorzugsweise eines einphasigen Synchronmotors, in einer vorbestimmten Drehrichtung,
• Betreiben (100) des Motors,
• Erkennen (200) einer Blockade des Motors an einem Anschlag des Antriebssystems,
• Stoppen (300) der Drehbewegung des Motors in der blockierten Drehstellung,
• Erfassen (400) der blockierten Drehstellung des Motors, und
• Verwenden (500) der erfassten blockierten Drehstellung des Motors als Referenzdrehstellung des Antriebssystems.

## Beschreibung

Die Erfindung betrifft ein Verfahren zum Betreiben eines Antriebssystems, ein Antriebssystem zum Ausführen eines derartigen Verfahrens sowie eine Vorrichtung mit einem derartigen Antriebssystem.

Zu den bekannten elektrischen Motoren gehören auch die Synchronmotoren, welche einphasig mit Wechselstrom oder mehrphasig mit Drehstrom betrieben werden können. In jedem Fall wird ein magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und Amplitude der Ausgangswechselspannung des Frequenzumrichters vorgegeben werden können. Dies kann das Drehverhalten des Synchronmotors z.B. beim Anlauf sowie in Abhängigkeit der anzutreibenden Last gezielt beeinflussen.

Dabei wird bei der Ansteuerung eines geregelten einphasigen Synchronmotors üblicherweise ein Sensor zur Ermittlung der Rotorlage benötigt, mit dessen Hilfe sich die gewünschten Kommutierungszeitpunkte ermitteln lassen.

Nachteilig hieran ist jedoch, dass ein derartiger Rotorlagesensor mit Mehrkosten verbunden ist. Weiterhin muss ein zusätzlicher Bauraum für den Rotorlagesensor vorgehalten werden. Auch weist die Verdrahtung bzw. die Verschaltung des Rotorlagesensors eine hohe Komplexität auf, was ebenfalls den Herstellungsaufwand erhöhen und bzw. oder eine Quelle für Fehlfunktionen darstellen kann.

Um die Rotorlage eines geregelten einphasigen Synchronmotors auch ohne die Verwendung eines Rotorlagesensors bestimmen und hierdurch die zuvor beschriebenen Nachteile des Rotorlagesensors vermeiden zu können, ist es bekannt, die Rotorlage ohne entsprechenden Rotorlagesensor zu ermitteln. Derartige Verfahren werden beispielsweise in der DE 40 33 121 A1, DE 10 2005 011 731 A1, AT 402 869 B, EP 0 574 823 A2, EP 1 376 848 A2, DE 10 2013 218 041 A1 und in der DE 10 2019 110 045 A1 beschrieben.

Derartige einphasige Synchronmotoren, welche im Falle eines mit Permanentmagneten versehenen Rotors auch als einphasige PM-Motoren bezeichnet werden können, werden aufgrund ihrer Einfachheit und der damit verbundenen geringen Kosten vielfältig eingesetzt. Beispielsweise kann die Wasserweiche eines Geschirrspülers oder einer Waschmaschine mittels eines einphasigen Synchronmotors gedreht werden, um das hereinströmende Wasser in den gewünschten Teil der Maschine zu leiten. Auch können derartige einphasige Synchronmotoren bei Haushaltsgeräten zur motorischen Türöffnung verwendet werden, ebenso bei Kaffeeautomaten zur Positionierung der Ausgabedüse auf Höhe der Kaffeetasse oder zum Betrieb von Keramikventilen. Auch ist die Verwendung bei Backöfen zur Klappensteuerung sowie zum Türverschluss bei der Pyrolyse möglich.

Wird als Anwendungsbeispiel von einphasigen Synchronmotoren eine Wasserweiche eines Geschirrspülers betrachtet, so sind dort heutzutage üblicherweise mindestens zwei Wasserweichenstellungen für den Spülprozess erforderlich. Um diese Stellungen des Verstellmechanismus einzunehmen, muss zum einen die gewünschte bzw. definierte Drehrichtung, wie zuvor bereits erwähnt, und zum anderen die gewünschten bzw. definierten Endpositionen und auch Zwischenpositionen, da derartige Wasserweichen üblicherweise einen Verstellbereich von 360° aufweisen, möglichst genau angefahren werden können, d.h. es muss eine entsprechende Positionierung in konkreten bzw. vorbestimmten Drehstellungen möglich sein.

Bekannt ist hierzu aus der DE 10 2014 106 912 A1 ein Verfahren zum Betrieb einer Wasserweiche zur Verteilung von Wasser innerhalb eines wasserführenden Haushaltsgeräts, insbesondere zur Verteilung von Wasser auf die Sprüharme eines Geschirrspülautomaten, wobei eine Verstelleinrichtung zum Öffnen und bzw. oder Schließen von Zu- und bzw. oder Abläufen der Wasserweiche in verschiedene Schaltstellungen verfahren wird, wobei eine Nockenscheibe gekoppelt mit der Verstelleinrichtung bewegt wird, wobei ein mit einem Nockenprofil der Nockenscheibe zusammenwirkender Schalter durch mehrere Nocken und Täler des Nockenprofils geschaltet wird. Um ein Verfahren oder eine gattungsgemäße Wasserweiche dahingehend weiterzuentwickeln, dass mehr Schaltstellungen realisiert werden können, die Verfahrzeit reduziert werden kann und zudem auf einen Antrieb mit vorhersagbarer Drehrichtung gegebenenfalls verzichtet werden kann, wird vorgeschlagen, dass die Nockenscheibe zur Inbetriebnahme solange gedreht wird, bis zumindest ein Nocken des Nockenprofils den Schalter vollständig durchlaufen hat, wobei anhand der Länge des Nockens die Schaltstellung identifiziert wird.

Die Umsetzung einer derartigen Verstelleinrichtung mit Nockenscheibe und Schalter gemäß der DE 10 2014 106 912 A1 erfordert jedoch einen nicht unerheblichen Aufwand hinsichtlich des Materials bzw. der Komponenten sowie deren Montage, Verkabelung und Ansteuerung bzw. Auswertung. So muss die Nockenscheibe über eine Übersetzung angetrieben werden, sodass die Drehzahl der Nockenscheibe der Drehzahl des Drehschiebers entspricht, da sich nur so die Position des Drehschiebers an der Nockenscheibe per Schalter "ablesen" lässt. Der Schalter ist mechanisch anzubringen und elektrisch zur Steuerung zu verschalten.

Der Erfindung stellt sich somit das Problem, eine, insbesondere möglichst exakte, Positionierung eines Antriebssystems mit einem Motor, vorzugsweise mit einem einphasigen Synchronmotor, mit weniger Aufwand als bisher bekannt zu ermöglichen. Insbesondere soll auf Messtechnik bzw. Sensorik zur Positionsbestimmung bzw. Drehstellungsbestimmung außerhalb des einphasigen Synchronmotors verzichtet werden können. Ganz besonders soll eine Positionsbestimmung bzw. Drehstellungsbestimmung des Antriebssystems der Wasserweiche mit Hilfe des einphasigen Synchronmotors lediglich mit Größen aus dessen Antriebsregelung bzw. mit Messgrößen einer Frequenzumrichter-Elektronik erfolgen können. In jedem Fall soll dies möglichst einfach, kostengünstig, bauraumsparend und bzw. oder verlässlich erfolgen können. Zumindest soll eine Alternative zu den bekannten Möglichkeiten geschaffen werden.

Erfindungsgemäß wird dieses Problem durch ein Verfahren, durch ein Antriebssystem sowie durch eine Vorrichtung mit den Merkmalen der unabhängigen Ansprüche gelöst. Vorteilhafte Ausgestaltungen und Weiterbildungen der Erfindung ergeben sich aus den nachfolgenden abhängigen Ansprüchen.

Somit betrifft die Erfindung ein Verfahren zum Betreiben eines Antriebssystems mit wenigstens den Schritten:
- Starten einer Drehbewegung eines Motors, vorzugsweise eines einphasigen Synchronmotors, in einer vorbestimmten Drehrichtung,
- Betreiben des Motors,
- Erkennen einer Blockade des Motors an einem Anschlag des Antriebssystems,
- Stoppen des Motors in der blockierten Drehstellung,
- Erfassen der blockierten Drehstellung des Motors und
- Verwenden der erfassten blockierten Drehstellung des Motors als Referenzdrehstellung des Antriebssystems.

Ein derartiges Antriebssystem weist entsprechend wenigstens den besagten Motor auf, welcher eine rotatorische Bewegung hin und her bzw. in zwei Richtungen erzeugen kann. Ferner weist das Antriebssystem einen Anschlag auf, gegen den das Antriebssystem, die Verstelleinrichtung, die Wasserweiche, bzw. der Motor bzw. dessen Rotor anschlagen kann, insbesondere mittels eines entsprechenden mechanischen Vorsprungs oder dergleichen.

Der vorliegenden Erfindung liegt die Erkenntnis zugrunde, dass bei einem Antriebssystem, welches definiert positioniert werden soll, auf entsprechende Sensorik oder auch auf eine Nockenscheibe gekoppelt mit einer Verstelleinrichtung wie bei der DE 10 2014 106 912 A1 verzichtet werden kann und entsprechend Kosten, Material, Bauraum und dergleichen gespart werden können, indem der Motor des Antriebssystems eine Referenzdrehstellung anfahren kann, um danach die definierte Positionierung der Verstelleinrichtung oder des Motors relativ zur Referenzdrehstellung vorzunehmen.

Erfindungsgemäß kann der Motor hierzu von einer vorbestimmten Seite bzw. aus einer vorbestimmten Drehrichtung gegen den Anschlag gefahren werden, wobei die hieraus resultierende Blockade der Drehbewegung des Motors bzw. dessen Rotors erkannt werden kann, beispielsweise aus Größen des Antriebs ermittelt werden kann, um auf entsprechende Sensorik zu verzichten. Dann kann diese Blockadestellung der Verstelleinrichtung oder des Motors bzw. blockierte Drehstellung mit der Referenzdrehstellung gleichgesetzt werden, um alle nachfolgenden Bewegungen relativ zur Referenzdrehstellung durchzuführen. Dies kann eine gewünschte Positionierung des Motors bzw. dessen Rotors und damit vom Rotor beweglicher Elemente des Antriebssystems bzw. einer Vorrichtung, welche das Antriebssystem aufweist, ermöglichen, ohne hierfür entsprechende Sensorik oder andere vergleichsweise aufwendige Möglichkeiten wie eine Nockenscheibe mit Verstelleinrichtung der DE 10 2014 106 912 A1 verwenden zu müssen.

Derartige Antriebssysteme bzw. Verfahren können vielfältig für Positionieraufgaben eingesetzt werden, insbesondere bei Haushaltsgeräten bzw. bei Küchengeräten. Dies kann beispielsweise für Geschirrspüler gelten, um die Wasserweiche einzustellen, aber auch für eine motorische Türöffnung. Dies kann auch für die Wasserweiche in der Wassereinlauf-Schublade einer Waschmaschine gelten. Ebenso kann ein derartiges Antriebssystem bzw. Verfahren bei einem Kaffeeautomat zur Positionierung der Ausgabe-Düse auf Höhe der Kaffeetasse oder bei Keramik-Ventilen genutzt werden. Bei Backöfen ist die Klappensteuerung oder der Türverschluss für eine Pyrolyse möglich.

In jedem Fall kann insbesondere ein einphasiger Synchronmotor, bevorzugt in einsträngiger Ausführung, als Motor des Antriebssystems verwendet werden, um dessen Eigenschaften und Vorteile, wie eingangs beschrieben, hier umzusetzen und zu nutzen.

Gemäß einem Aspekt der Erfindung weist das Verfahren ferner wenigstens die weiteren Schritte auf:
- Starten einer Drehbewegung des Motors in der entgegengesetzten Drehrichtung,
- Berechnen des Maßes der Drehbewegung des Motors basierend auf Parametern des Antriebssystems, vorzugsweise basierend auf dem elektrischen Winkel des Motors des Antriebssystems und auf der Getriebeübersetzung eines Getriebes des Antriebssystems, und
- Stoppen der Drehbewegung des Motors in einer vorbestimmten Drehstellung relativ zur Referenzdrehstellung.

Somit kann relativ zur zuvor erkannten Referenzdrehstellung des Motors bzw. dessen Rotors eine definierte Drehposition bzw. Drehstellung angefahren werden, ohne dass hierfür eine sensorische Erfassung der Drehposition bzw. Drehstellung erforderlich wäre.

Gemäß einem weiteren Aspekt der Erfindung weist das Verfahren ferner wenigstens die weiteren Schritte auf:
- Starten (700) einer weiteren Drehbewegung des Motors in der vorbestimmten oder der entgegengesetzten Drehrichtung,
- Berechnen (800) des Maßes der Drehbewegung des Motors basierend auf Parametern des Antriebssystems, vorzugsweise basierend auf dem elektrischen Winkel des Motors des Antriebssystems und auf der Getriebeübersetzung eines Getriebes des Antriebssystems, und
- Stoppen (900) der Drehbewegung des Motors in einer vorbestimmten Drehstellung relativ zur Referenzdrehstellung.

Dies kann in dieser Form mehrfach und in beide Drehrichtungen wiederholt werden, um entsprechend viele definierte Drehpositionen bzw. Drehstellungen im Laufe des Betriebs des Antriebssystems bzw. dessen Vorrichtung anzufahren bzw. einzunehmen.

Das Berechnen des Maßes der Drehbewegung, d.h. der Veränderung der Drehstellung aus der aktuellen Drehstellung bzw. gegenüber der Referenzdrehstellung bis zur nächsten einzunehmenden vorbestimmten Drehstellung, des Motors kann auf unterschiedliche geeignete Arten und Weisen erfolgen. Als besonders genaue und einfache Art der Berechnung des Maßes der Drehbewegung kann hierzu der elektrische Winkel des Motors des Antriebssystems und die Getriebeübersetzung eines Getriebes des Antriebssystems zurückgegriffen werden, welche bekannt und konstant sind und somit eine verlässliche und genaue Berechnungsgrundlage darstellen.

Gemäß einem weiteren Aspekt der Erfindung weist das Verfahren ferner wenigstens den weiteren Schritt auf:
- Speichern der Referenzdrehstellung des Motors in einem, bevorzugt nicht-flüchtigen, Speicher, vorzugsweise des Antriebssystems.

Somit kann die wie zuvor bereits beschriebene bestimmte Referenzdrehstellung der Verstelleinrichtung bzw. des Motors gespeichert und hierdurch bei einem erneuten Betriebsbeginn des Antriebssystems geladen bzw. abgerufen werden, um nicht bei jedem Betriebsbeginn des Antriebssystems die zuvor beschriebene erfindungsgemäße Referenzierung wieder durchführen zu müssen, wodurch der entsprechende Aufwand eingespart werden kann.

Gemäß einem weiteren Aspekt der Erfindung weist das Erkennen der Blockade des Motors wenigstens die Schritte auf:
- Überwachen wenigstens einer Zustandsgröße und bzw. oder wenigstens einer Zustandsgrößenänderung des Motors während des Betreibens,
- im Falle des Erreichens oder des Überschreitens des vorbestimmten Schwellwertes der Zustandsgröße und bzw. oder der Zustandsgrößenänderung, Erkennen der Blockade des Motors, oder
- im Falle des Unterschreitens eines vorbestimmten Schwellwertes der Zustandsgröße und bzw. oder der Zustandsgrößenänderung, Fortsetzen des Betreibens des Motors.

Dies kann eine konkrete Möglichkeit darstellen, eine Blockade des Motors bzw. dessen Rotors des Antriebssystems zu erkennen, um im Falle einer Blockade die Referenzdrehstellung zu erkennen.

Hierzu kann eine geeignete Zustandsgröße und bzw. oder eine geeignete Zustandsgrößenänderung des Motors während des Betriebs bzw. während der Bewegung des Motors bzw. dessen Rotors verwendet werden, indem ein entsprechender Schwellwert bzw. Grenzwert betrachtet wird und je nachdem, ob dieser Wert entweder erreicht bzw. überschritten oder unterschritten wird, auf eine Blockade oder auf eine Bewegung des Motors bzw. dessen Rotors zu schließen.

Beispielsweise kann aus einem zu hohen Motorstrom selbst oder aus dessen vergleichsweise starken Anstieg geschlossen werden, dass eine Steuerungseinheit den **Motor stärker** als bei einer Bewegung bestromt, um entgegen einer Schwergängigkeit oder Blockade die Bewegung zu erreichen, woraus, d.h. aus dem überschrittenen Schwellwert des Motorstroms bzw. dessen Anstiegs, auf die erwartete Blockade geschlossen und diese somit erkannt werden kann. Andernfalls kann der Betrieb des Motors fortgesetzt werden.

Gemäß einem weiteren Aspekt der Erfindung weist das Überwachen der Zustandsgrößenänderung die Schritte auf:
- bei jeder halben elektrischen Periode des Motors, Bestimmen der Änderung des Betrags des Stroms des Motors, der Änderung der Drehzahl des Motors und bzw. oder der Änderung des elektrischen Moments des Motors,
- im Falle des Erreichens oder Überschreitens eines vorbestimmten Schwellwertes der Zustandsgrößenänderung,
   ∘ Beenden des Betreibens des Motors,
   ∘ Erfassen der induzierten Spannung des Motors über wenigstens ein Viertel der elektrischen Periode des Motors,
   ∘ im Falle des Erreichens oder Überschreitens eines vorbestimmten Schwellwertes der Amplitude der induzierten Spannung des Motors, Fortsetzen des Betreibens des Motors, oder
   ∘ im Falle des Unterschreitens des vorbestimmten Schwellwertes der Amplitude der induzierten Spannung des Motors, Erkennen der Blockade des Motors, oder
- im Falle des Unterschreitens des vorbestimmten Schwellwertes der Zustandsgrößenänderung, Fortsetzen des Betreibens des Motors.

In diesen Fall wird somit wenigstens eine Änderung einer Zustandsgröße bzw. dessen Betrags überwacht, was auch die Überwachung der Änderung von mehreren Zustandsgrößen bzw. deren Beträge einschließt. In jedem Fall führt ein Erreichen oder Überschreiten eines vorbestimmten Schwellwertes der Zustandsgrößenänderung, wie zuvor beschrieben, dazu, dass eine weitere Größe des Motors betrachtet wird. Diese weitere Größe des Motors ist die induzierte Spannung des Motors im stromlosen Zustand und vorzugsweise beim Stromnulldurchgang, welche anschließend ausgewertet wird.

Ist die erfasste Amplitude der induzierten Spannung des Motors geringer als der entsprechende Schwellwert, so bewegt sich der Rotor tatsächlich nicht mehr, da eine Bewegung des Rotors eine Spannung des Motors im stromlosen Zustand induzieren würde, dessen Amplitude größer als der Schwellwert wäre. Entsprechend wird der Motor vom Anschlag blockiert und die Referenzdrehstellung des Motors ist erreicht.

Ist hingegen die erfasste Amplitude der induzierten Spannung des Motors gleich oder größer als der entsprechende Schwellwert, so bewegt sich der Motor bzw. dessen Rotor ausreichend, um aufgrund seiner Bewegung eine entsprechend hohe bzw. starke Spannung des Motors im stromlosen Zustand zu induzieren, dessen Amplitude größer als der Schwellwert ist. Dies kann beispielsweise bei einer Schwergängigkeit im Verstellmechanismus oder im Antriebssystem der Falls sein. Entsprechend ist die Referenzdrehstellung des Motors noch nicht erreicht und die Drehbewegung des Motors wird fortgesetzt.

Gemäß einem weiteren Aspekt der Erfindung erfolgt ein Erfassen der induzierten Spannung des Motors zum Bestimmen der Änderung der induzierten Spannung des Motors in einem stromlosen Zustand des Motors, vorzugsweise im Stromnulldurchgang des Motors.

Dies kann die Unterscheidung zwischen den beiden zuvor beschriebenen Zuständen erleichtern.

Gemäß einem weiteren Aspekt der Erfindung erfolgt ein Erfassen der induzierten Spannung des Motors zum Bestimmen der Änderung der induzierten Spannung des Motors mittels eines Schätzers, vorzugsweise mittels eines Modells des Motors.

Dies kann eine konkrete Möglichkeit der Umsetzung darstellen, bei welcher auf entsprechende Messungen und hierauf basierender Berechnung verzichtet werden kann.

Gemäß einem weiteren Aspekt der Erfindung wird der Motor mittels einer H-Brücken-Ansteuerung oder mittels einer Triac-Ansteuerung betrieben.

Dies können konkrete Möglichkeiten der Umsetzung darstellen.

Die vorliegende Erfindung betrifft auch ein Antriebssystem zum Ausführen eines Verfahrens wie zuvor beschrieben mit einem Motor, vorzugsweise einem einphasigen Synchronmotor, mit einem Anschlag zum Blockieren einer Drehbewegung des Motors und mit einer Steuerungseinheit zum Ausführen des Verfahrens.

Hierdurch kann ein Antriebssystem zur Verfügung gestellt werden, welches ausgebildet ist, das zuvor beschriebene erfindungsgemäße Verfahren umzusetzen und dessen Eigenschaften und Vorteile zu nutzen.

Die vorliegende Erfindung betrifft ferner eine Vorrichtung, vorzugsweise ein Haushaltsgerät, mit wenigstens einem Antriebssystem wie zuvor beschrieben.

Hierdurch kann eine Vorrichtung zur Verfügung gestellt werden, um das zuvor beschriebene Antriebssystem umzusetzen und dessen Eigenschaften und Vorteile zu nutzen.

Hinsichtlich der Erfindung sei allgemein angemerkt, dass beispielsweise der Steuerung eines Geschirrspülers bei Verwendung eines erfindungsgemäßen Antriebssystems bzw. dessen Verfahren wie zuvor beschrieben zu jedem Zeitpunkt die genaue Ist-Position des Drehschiebers der Wasserweiche ohne Verwendung eines Positions- oder Drehwinkelsensors (siehe z.B. DE 10 2014 106 912) zur Verfügung stehen kann. Hierzu kann zunächst, also z.B. auch nach dem Einschalten der Maschine, mindestens einmal eine Referenzierung der Ist-Position erfindungsgemäß durchgeführt werden.

Vorzugsweise geschieht dies nur einmal pro Programmablauf bzw. einmal nach dem Einschalten der Versorgungsspannung der Elektronik. Aber auch das mehrfache Referenzieren während eines Betriebszyklus (vom Ein- bis zum Ausschalten der Versorgungsspannung) zur erneuten Referenzierung kann möglich sein.

Unter der Voraussetzung, dass der Motor in vorgegebener Drehrichtung dreht, können auch zwei Anschläge bzw. mechanische Endanschläge des Antriebssystems wie beispielsweise des Drehschiebers der Wasserweiche unterschieden werden. Hiermit kann die zuvor beschriebene Referenzierung durchgeführt werden.

Die Blockierungs-Erkennung kann genutzt werden, um die zuvor beschriebenen Anschläge bzw. mechanischen Endanschläge des Antriebs bzw. des Drehschiebers der Wasserweiche ohne Verwendung eines Positions- oder Drehwinkelsensors zu erfassen. Das Verfahren in vorgegebene Absolut-Positionen kann hierdurch ermöglicht werden.

Diese Erkennung eines mechanischen Anschlages des Antriebs bzw. eines Stellglieds kann benutzt werden, um mindestens eine Referenzposition anzufahren. Es können sinnhaft auch zwei Referenzpositionen, je nach gewählter Drehrichtung, vorhanden sein bzw. angefahren werden können. Diese Position bzw. Positionen (genannt: Absolut-Positionen, Blockadepositionen, Referenzpositionen, Initial-Positionen) kann bzw. können durch eine mechanische Vorrichtung (hier mech. Blockade/Anschlag) definiert werden, bei welcher der Antriebsmotor blockiert. Hierdurch können die Informationen über die absoluten Initial-Positionen entstehen, welche in der Anwendung auch den mechanischen Endpositionen entsprechen können.

Alle weiteren Positionen beispielsweise des Drehschiebers der Wasserweiche können relativ zu der wenigstens einen Referenzdrehstellung bzw. zu den beiden erfassten Initial-Positionen (Endanschlägen) angefahren werden. Hierbei sind theoretisch beliebig viele Zwischenpositionen möglich.

Es kann eine Positionierung in der Anwendung mittels Berechnung des überstrichenen Winkels des Antriebs (Integration oder Summe ganzer oder teilweiser elektrischer Perioden des Motorstroms) und unter Berücksichtigung der ggf. vorhandenen mechanischen Übersetzung erfolgen, basierend auf den zuvor erfassten und bekannten absoluten Initial-Positionen. Es ist denkbar mit dem Verfahren beliebig viele Zwischen-Positionen anfahren zu können, ggfs. mit einer Genauigkeit bis hin zur Winkel-Auflösung der Rotorpositionierung geteilt durch die Getriebeübersetzung.

Hiermit kann es grundsätzlich ermöglicht werden, einen Aktor, bestehend aus Antriebsmotor und zugehöriger Mechanik, "sensorlos" beliebig zu Positionieren.

Ein Ausführungsbeispiel der Erfindung ist in den Zeichnungen rein schematisch dargestellt und wird nachfolgend näher beschrieben. Es zeigt
- Figur 1: ein Ablaufdiagramm eines erfindungsgemäßen Verfahrens;
- Figur 2: einen zeitlichen Verlauf der Änderung des Betrags des Stroms des Motors sowie der Amplitude der induzierten Spannung des Motors mit Schwellwerten bei fortgesetztem Betrieb, beispielsweise einer Schwergängigkeit im Antriebssystem, des Motors; und
- Figur 3: die Darstellung der Figur 2 bei einer Blockade des Motors.

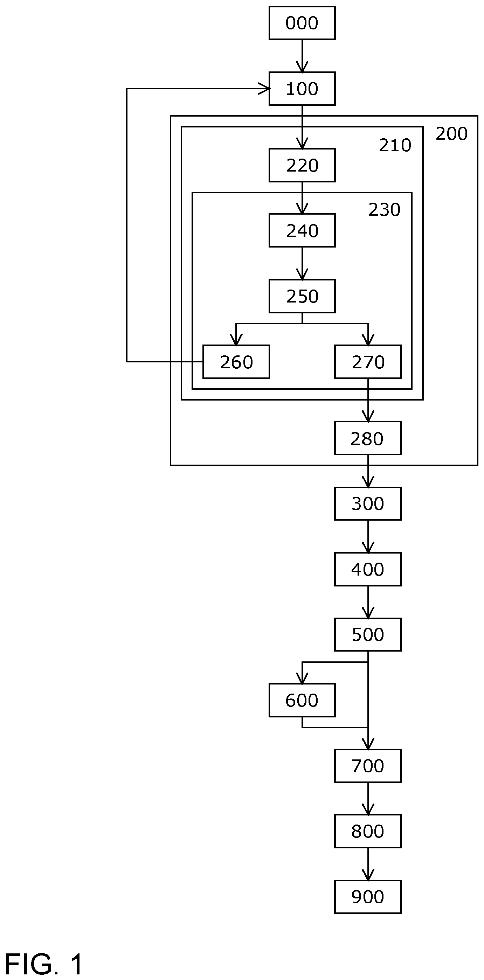

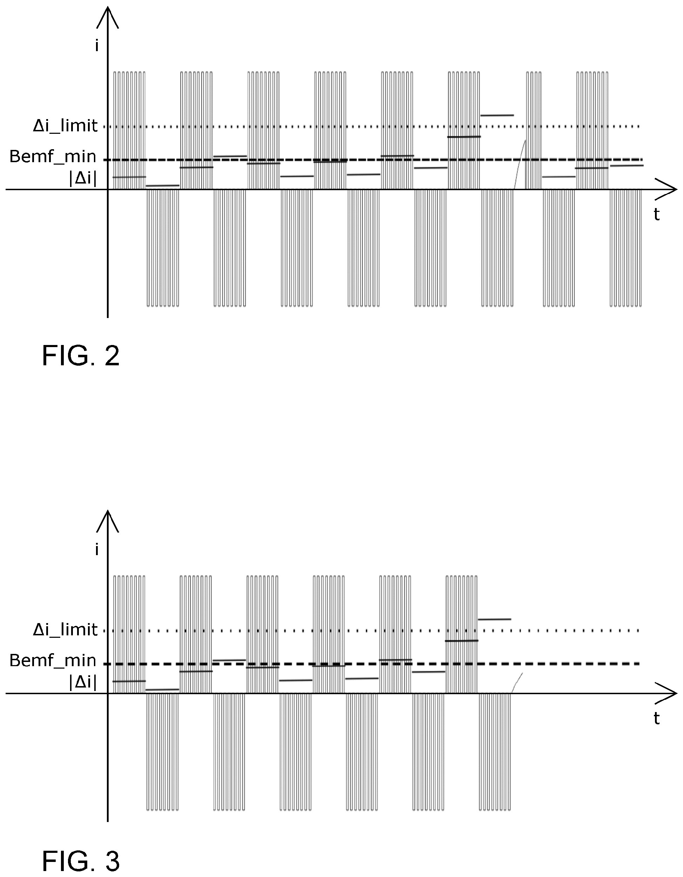

Figur 1 zeigt ein Ablaufdiagramm eines erfindungsgemäßen Verfahrens. Figur 2 zeigt einen zeitlichen Verlauf der Änderung des Stroms des Motors sowie der Amplitude der induzierten Spannung des Motors mit Schwellwerten bei fortgesetztem Betrieb des Motors. Figur 3 zeigt die Darstellung der Figur 2 bei einer Blockade des Motors.

Es wird (nicht dargestellt) ein Antriebssystem mit einem Motor in Form eines einphasigen Synchronmotors, mit einem Anschlag zum Blockieren einer Drehbewegung des Motors und mit einer Steuerungseinheit betrachtet, welche ein erfindungsgemäßes Verfahren gemäß des Ablaufdiagramms der Figur 1 ausführen kann. Das erfindungsgemäße Antriebssystem kann bei einer Vorrichtung wie vorzugsweise bei einem Haushaltsgerät eingesetzt werden, um dort ein Element der Vorrichtung definiert in einer Drehstellung des Motors bzw. dessen Rotors zu positionieren, ohne hierzu einen Sensor zur Erfassung der Drehstellung oder dergleichen verwenden zu müssen. Der Motor kann mittels einer H-Brücken-Ansteuerung oder mittels einer Triac-Ansteuerung betrieben werden.

Das erfindungsgemäße Verfahren weist hierzu die folgenden Schritte auf.

Es erfolgt zunächst ein Starten 000 einer Drehbewegung des einphasigen Synchronmotors in einer vorbestimmten Drehrichtung. Es erfolgt dann ein Betreiben 100 des Motors mit einer konstanten oder variablen Drehzahl. Dabei erfolgt wiederholend während der Bewegung bzw. während des Betreibens 100 des Motors ein Erkennen 200 einer Blockade des Motors an einem Anschlag des Antriebssystems.

Das Erkennen 200 der Blockade des Motors weist dabei seinerseits Schritte auf. So erfolgt während des Betreibens 100 ein fortlaufendes Überwachen 210 wenigstens einer Zustandsgrößenänderung des Motors über der Zeit t, welches seinerseits Schritte aufweist. Dabei erfolgt bei jeder halben elektrischen Periode des Motors ein Bestimmen 220 des Betrags |Δi| der Änderung Δi des Stroms i des Motors, siehe Figuren 2 und 3, wobei auch die Änderung der Drehzahl des Motors und bzw. oder die Änderung des elektrischen Moments des Motors betrachtet werden können.

Im Falle des Erreichens oder Überschreitens 230 eines vorbestimmten Schwellwertes Δi_limit der Zustandsgrößenänderung, d.h. der Änderung Δi des Stroms i des Motors bzw. dessen Betrags, siehe Figuren 2 und 3, erfolgt ein Beenden 240 des Betreibens 100 des Motors mit der konstanten Drehzahl und ein Erfassen 250 der induzierten Spannung Bemf des Motors über wenigstens ein Viertel der elektrischen Periode des Motors, siehe ebenfalls Figuren 2 und 3.

Im Falle des Erreichens oder Überschreitens 260 eines vorbestimmten Schwellwertes Bemf_min der Amplitude der induzierten Spannung Bemf des Motors, siehe Figur 2, erfolgt ein Fortsetzen des Betreibens 100 des Motors mit der konstanten Drehzahl, da doch keine Blockade des Motors vorliegt. Ansonsten erfolgt im Falle des Unterschreitens 270 des vorbestimmten Schwellwertes Bemf_min der Amplitude der induzierten Spannung Bemf des Motors, siehe Figur 3, ein Erkennen 200 der Blockade des Motors.

Somit erfolgt im Falle des Erreichens oder des Überschreitens 280 des vorbestimmten Schwellwertes der Zustandsgrößenänderung ein Erkennen 200 der Blockade des Motors. Alternativ erfolgt im Rahmen des Überwachens 210 der Zustandsgrößenänderung im Falle des Unterschreitens des vorbestimmten Schwellwertes der Zustandsgrößenänderung ein Fortsetzen des Betreibens 100 des Motors.

Dabei erfolgt das Erfassen 250 der induzierten Spannung des Motors zum Bestimmen 220 der Änderung der induzierten Spannung des Motors in einem stromlosen Zustand des Motors und vorzugsweise im Stromnulldurchgang des Motors. Alternativ kann ein Erfassen 250 der induzierten Spannung des Motors zum Bestimmen 220 der Änderung der induzierten Spannung des Motors mittels eines Schätzers und vorzugsweise mittels eines Modells des Motors erfolgen.

Ist die Blockade des Motors und damit das Erreichen des Anschlags erkannt, so erfolgt ein Stoppen 300 der Drehbewegung des Motors in der blockierten Drehstellung durch Abschaltung. Es folgt ein Erfassen 400 der blockierten Drehstellung des Motors und ein Verwenden 500 der erfassten blockierten Drehstellung des Motors als Referenzdrehstellung. Es kann ein Speichern 600 der Referenzdrehstellung des Motors in einem nicht-flüchtigen Speicher, vorzugsweise des Antriebssystems, erfolgen, um die zuvor beschriebene Referenzierung nicht immer wieder, beispielsweise bei jedem neuen Betriebsbeginn der Vorrichtung, wiederholen zu müssen.

Anschließend kann das Antriebssystem betrieben werden, um verschiedene Drehstellungen des Motors bzw. dessen Rotors gegenüber der Referenzdrehstellung anzufahren und einzunehmen. Hierzu kann als erste Bewegung aus der Referenzdrehstellung heraus ein Starten 700 einer Drehbewegung des Motors in der entgegengesetzten Drehrichtung erfolgen. Dabei erfolgt ein Berechnen 800 des Maßes der Drehbewegung des Motors basierend auf Parametern des Antriebssystems, welche vorzugsweise auf dem elektrischen Winkel des Motors des Antriebssystems und auf der Getriebeübersetzung eines Getriebes des Antriebssystems basieren. In der vorbestimmten Drehstellung relativ zur Referenzdrehstellung erfolgt dann ein Stoppen 900 der Drehbewegung des Motors.

In weiteren Schritten (nicht gezeigt) kann das Antriebssystem dann weiter betrieben werden, um noch weitere Drehstellungen des Motors bzw. dessen Rotors gegenüber der Referenzdrehstellung anzufahren und einzunehmen, wobei die dafür nötige Drehbewegung beliebig entweder in der vorbestimmten oder der entgegengesetzten Drehrichtung erfolgen kann.

### Bezugszeichenliste (Bestandteil der Beschreibung)

- Bemf: induzierten Spannung des Motors
- Bemf_min: Schwellwert der Amplitude der induzierten Spannung Bemf des Motors
- i: Strom des Motors
- Δi: Änderung des Stroms i des Motors
- |Δi|: Betrag der Änderung Δi des Stroms i des Motors
- Δi_limit: Schwellwert der Änderung Δi des Stroms i des Motors
- t: Zeit

- 000: Starten einer Drehbewegung eines Motors in einer vorbestimmten Drehrichtung
- 100: Betreiben des Motors
- 200: Erkennen einer Blockade des Motors an einem Anschlag des Antriebssystems
- 210: Überwachen einer Zustandsgröße und/oder Zustandsgrößenänderung
- 220: Bestimmen des Betrags der Änderung der Zustandsgröße
- 230: Erreichen oder Überschreiten eines vorbestimmten Schwellwertes der Zustandsgrößenänderung
- 240: Beenden des Betreibens 100 des Motors
- 250: Erfassender induzierten Spannung Bemf des Motors
- 260: Erreichen oder Überschreiten eines vorbestimmten Schwellwertes Bemf_min der Amplitude der induzierten Spannung Bemf des Motors
- 270: Unterschreiten des vorbestimmten Schwellwertes Bemf_min der Amplitude der induzierten Spannung Bemf des Motors
- 280: Erreichen oder Überschreitens des vorbestimmten Schwellwertes der Zustandsgröße und/oder der Zustandsgrößenänderung
- 300: Stoppen des Motors in der blockierten Drehstellung
- 400: Erfassender blockierten Drehstellung des Motors
- 500: Verwenden der erfassten blockierten Drehstellung des Motors als Referenzdrehstellung
- 600: Speichern der Referenzdrehstellung des Motors in einem nicht-flüchtigen Speicher
- 700: Starten einer Drehbewegung des Motors in der entgegengesetzten Drehrichtung,
- 800: Berechnen des Maßes der Drehbewegung des Motors
- 900: Stoppen der Drehbewegung des Motors in einer vorbestimmten Drehstellung relativ zur Referenzdrehstellung

## Patentansprüche

1. Verfahren zum Betreiben eines Antriebssystems mit wenigstens den Schritten:
• Starten (000) einer Drehbewegung eines Motors, vorzugsweise eines einphasigen Synchronmotors, in einer vorbestimmten Drehrichtung,
• Betreiben (100) des Motors,
• Erkennen (200) einer Blockade des Motors an einem Anschlag des Antriebssystems,
• Stoppen (300) des Motors in der blockierten Drehstellung,
• Erfassen (400) der blockierten Drehstellung des Motors und
• Verwenden (500) der erfassten blockierten Drehstellung des Motors als Referenzdrehstellung für das Antriebssystem.

2. Verfahren nach Anspruch 1 mit wenigstens den weiteren Schritten:
• Starten (700) einer Drehbewegung des Motors in der entgegengesetzten Drehrichtung,
• Berechnen (800) des Maßes der Drehbewegung des Motors basierend auf Parametern des Antriebssystems, vorzugsweise basierend auf dem elektrischen Winkel des Motors des Antriebssystems und auf der Getriebeübersetzung eines Getriebes des Antriebssystems, und
• Stoppen (900) der Drehbewegung des Motors in einer vorbestimmten Drehstellung relativ zur Referenzdrehstellung.

3. Verfahren nach Anspruch 2, weiter umfassend:
• Starten (700) einer weiteren Drehbewegung des Motors in der vorbestimmten oder der entgegengesetzten Drehrichtung,
• Berechnen (800) des Maßes der Drehbewegung des Motors basierend auf Parametern des Antriebssystems, vorzugsweise basierend auf dem elektrischen Winkel des Motors des Antriebssystems und auf der Getriebeübersetzung eines Getriebes des Antriebssystems, und
• Stoppen (900) der Drehbewegung des Motors in einer vorbestimmten Drehstellung relativ zur Referenzdrehstellung.

4. Verfahren nach Anspruch 1, 2 oder 3 mit wenigstens dem weiteren Schritt:
• Speichern (600) der Referenzdrehstellung des Motors in einem, bevorzugt nicht-flüchtigen, Speicher, vorzugsweise des Antriebssystems.

5. Verfahren nach einem der vorangehenden Ansprüche,
wobei das Erkennen (200) der Blockade des Motors wenigstens die Schritte aufweist:
• Überwachen (210) wenigstens einer Zustandsgröße und/oder wenigstens einer Zustandsgrößenänderung des Motors während des Betreibens (100),
• im Falle des Erreichens oder des Überschreitens (280) des vorbestimmten Schwellwertes der Zustandsgröße und/oder der Zustandsgrößenänderung, Erkennen (200) der Blockade des Motors, oder
• im Falle des Unterschreitens eines vorbestimmten Schwellwertes der Zustandsgröße und/oder der Zustandsgrößenänderung, Fortsetzen des Betreibens (100) des Motors mit der konstanten Drehzahl.

6. Verfahren nach Anspruch 5,
wobei das Überwachen (210) der Zustandsgrößenänderung die Schritte aufweist:
• bei jeder halben elektrischen Periode des Motors, Bestimmen (220) des Betrags |Δi| der Änderung (Δi) des Stroms (i) des Motors, der Änderung der Drehzahl des Motors und/oder der Änderung des elektrischen Moments des Motors,
• im Falle des Erreichens oder Überschreitens (230) eines vorbestimmten Schwellwertes (Δi_limit) der Zustandsgrößenänderung,
∘ Beenden (240) des Betreibens (100) des Motors,
∘ Erfassen (250) der induzierten Spannung (Bemf) des Motors über wenigstens ein Viertel der elektrischen Periode des Motors,
∘ im Falle des Erreichens oder Überschreitens (260) eines vorbestimmten Schwellwertes (Bemf_min) der Amplitude der induzierten Spannung (Bemf) des Motors, Fortsetzen des Betreibens (100) des Motors in der vorbestimmten Drehrichtung, oder
∘ im Falle des Unterschreitens (270) des vorbestimmten Schwellwertes (Bemf_min) der Amplitude der induzierten Spannung (Bemf) des Motors, Erkennen (200) der Blockade des Motors, oder
• im Falle des Unterschreitens des vorbestimmten Schwellwertes (Δi_limit) der Zustandsgrößenänderung, Fortsetzen des Betreibens (100) des Motors in der vorbestimmten Drehrichtung.

7. Verfahren nach Anspruch 6,
wobei ein Erfassen (250) der induzierten Spannung (Bemf) des Motors in einem stromlosen Zustand des Motors, vorzugsweise im Wesentlichen beim Stromnulldurchgang des Motors, erfolgt.

8. Verfahren nach Anspruch 6,
wobei ein Erfassen (250) der induzierten Spannung (Bemf) des Motors mittels eines Schätzers, vorzugsweise mittels eines Modells des Motors, erfolgt.

9. Verfahren nach einem der vorangehenden Ansprüche,
wobei der Motor mittels einer H-Brücken-Ansteuerung oder mittels einer Triac-Ansteuerung betrieben wird.

10. Antriebssystem zum Ausführen eines Verfahrens nach einem der vorangehenden Ansprüche
mit einem Motor, vorzugsweise einem einphasigen Synchronmotor,
mit einem Anschlag zum Blockieren einer Drehbewegung des Motors, und
mit einer Steuerungseinheit, die zum Ausführen des Verfahrens eingerichtet ist.

11. Vorrichtung, vorzugsweise Haushaltsgerät,
mit wenigstens einem Antriebssystem nach Anspruch 10.
